# EUROPEAN PATENT APPLICATION

(11) **EP 2 002 922 A1**
(43) Date of publication of application: **17.12.2008**
(21) Application number: 08252066.9
(22) Date of filing: 16.06.2008
(51) Int. Cl.: B23K 20/12

(54) **Friction stir welding of oxide dispersion strengthened alloys**

(30) Priority: 15.06.2007 US 818700
(71) Applicant: Pratt & Whitney Rocketdyne Inc., Canoga Park, CA 91309 (US)
(72) Inventor: Zillmer, Andrew J., Woodland Hills, CA 91367 (US); Hoffman, Nathan J., Canoga Park CA 91304 (US); Yang, Sherwin, Chatsworth, CA 91311 (US); Litwin, Robert Z., Canoga Park, CA 91304 (US); O'Connor, George M., Simi Valley, CA 93065 (US)
(74) Representative: Tomlinson, Kerry John

(57) **Abstract**

A structure and a method of forming the structure in high temperature sections of next generation nuclear and solar power plants where the structure consists of piping, ducting and enclosures fabricated from oxide dispersion strengthened (ODS) alloys joined by friction stir welding (FSW) to other ODS alloys or any alloy.

## Description

### BACKGROUND

The present invention relates generally to the very high temperature regions of next generation nuclear and solar power plants and, more specifically, to critical metal structures and components in the very high temperature regions therein.

General trends in nuclear and solar power generation are to increase operating temperatures since the efficiency of any turbine scales as the temperature difference between the inlet and outlet temperatures of the working fluid driving the turbine. The upper temperature operating limits of a power plant are usually determined by the high temperature properties of the materials used in the construction of the high temperature region of the plant. Examples of the next generation nuclear and solar power plants are the Very High Temperature Reactor (VHTR) and the Molten Salt Solar Power Tower Electrical Generation Plant. These will be described later. The high temperature regions of the power plants will continually operate at temperatures exceeding 800°C (1472°F). This is an upper limit for most structural alloys. Iron based superalloys are needed for nuclear reactor applications because they are resistant to swelling in high neutron fluxes. Nickel and cobalt based superalloys are required for molten salt power tower application because they are resistant to high temperature corrosion.

Ideal candidates for piping and containment in the reactors are oxide dispersion strengthened (ODS) alloys. As discussed below, ODS alloys cannot be joined by conventional fusion welding. They can be joined by friction stir welding (FSW). Friction stir welding of ODS alloys, particularly for very high temperature application in nuclear and solar power plants forms the basis of this invention.

### SUMMARY

The present invention relates to a welded structure and a method of forming the welded structure. The welded structure includes metal parts that are secured together at a welded joint by friction stir welding, where the metal parts are derived from ODS alloys and other alloys.

### BRIEF DESCRIPTION OF THE DRAWINGS

FIG. 1 is a schematic of a Very High Temperature Reactor and Hydrogen Production Plant.
FIG. 2 is a schematic showing a Molten Salt Power Tower Solar Power Generation System.
FIG. 3 is a perspective view of a welded structure being formed with friction stir welding system.
FIG. 4 is a flow diagram of a method of forming the welded structure with the friction stir welding system.
FIG. 5 is a perspective view of friction stir welded ODS superalloy;
FIG. 6 is a photo of a longitudinal section of a weld.
FIG. 7 is a photo of a transverse section of the weld.

### DETAILED DESCRIPTION

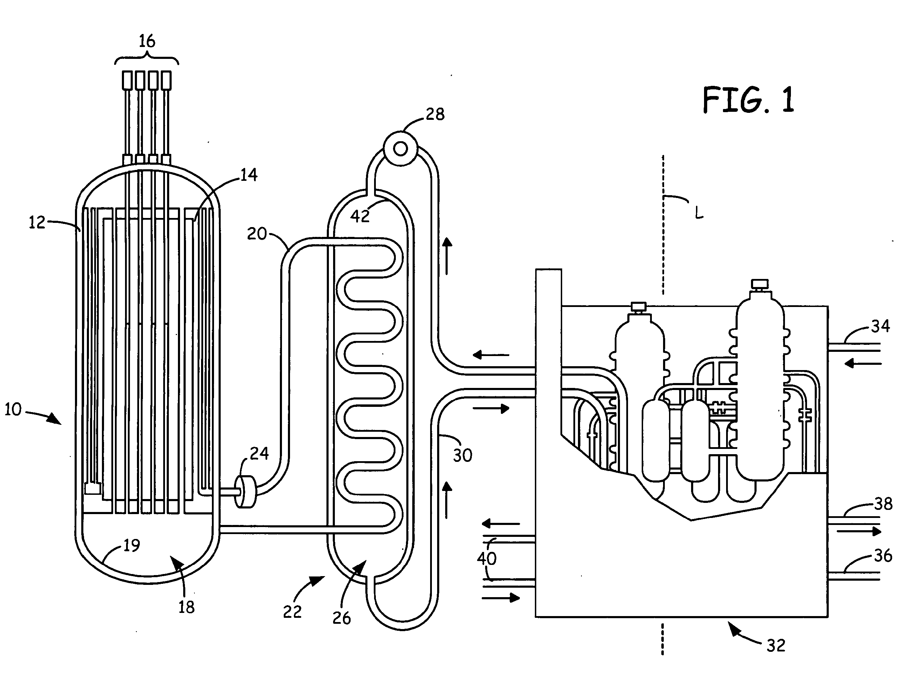

Figure 1 is a schematic of a Very High Temperature Reactor (VHTR) designed for the next generation (Gen. IV) of nuclear power reactors. The reactor 10 includes external container 12, graphite reactor core with Uranium/Graphite fuel 14, control rods 16, and reactor shell 19. Helium gas coolant 18 is circulated through pipe 20 from reactor 10 to heat exchanger 22 by blower 24. Working fluid 26 in heat exchanger 22 is pumped away from heat exchanger 22 by pump 28 through pipe 30 to places where useful heat can be extracted for hydrogen production in Hydrogen Production Plant 32, for electrical power generation (not shown) and for other useful processes (not shown). Hydrogen Production Plant 32 takes water 34 in to produce hydrogen 36 and oxygen 38 by thermochemical processes. Excess heat 40 is diverted through a heat sink to dispose of it. Dotted line L schematically illustrates the boundary between regions where components will experience operation temperatures in excess of 800°C (1472°F) on the left side of line L and regions where components will experience operating temperatures less than 800°C (1472°F) on the right side of line L. Critical components that require high mechanical strength and creep rupture resistance at temperatures in excess of 800°C (1472°F) are reactor shell 19, heat exchanger shell 42, helium piping 20, and heat exchanger piping 30. Oxide dispersion strengthened (ODS) alloys are suitable candidates for these applications as discussed later.

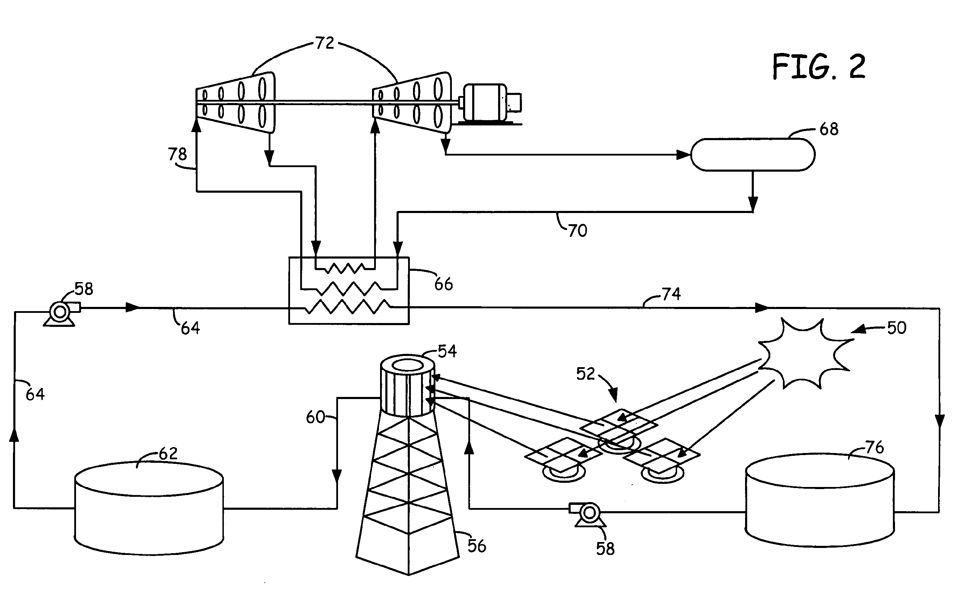

Another application for ODS alloys in next generation power plants is shown in FIG. 2, which is a schematic of a Molten Salt Solar Power Tower Electrical Generation Plant. Basically, the system uses concentrated sunlight focused on a heat exchanger containing a plethora of pipes through which molten salt is circulated. Heat is extracted from the molten salt to generate steam that drives a turbine to generate electrical power. As shown in FIG. 2, sunlight 50 is concentrated and directed from a large field of heliostats 52 to receiver 54 on tall tower 56. Receiver 54 contains an array (not shown) of pipes through which molten salt is circulated by pumps 58. The salt from receiver 54 is heated to 816°C (1,500°F) or greater before it is pumped through pipe 60 to hot salt thermal storage tank 62. From there, when needed, the salt is pumped through pipes 64 to heat exchanger 66. Water flowing from condenser 68 through pipes 70 is turned into steam that drives turbines 72 and generates electricity. After leaving the heat exchanger, the molten salt can be reduced to a temperature as low as 288°C (550°F) and is pumped through pipe 74 to cold salt storage tank 76 before repeating the closed loop process. The receiver 54, hot sections of pipes 60 and 64, hot salt thermal storage tank 62, heat exchanger 66, portions of turbine 72 and associated steam piping 78 all experience temperatures as high as 816°C (1,500°F) or greater. In addition, all the salt containing components need to resist corrosion from molten salt. As with the nuclear power application discussed and referenced to FIG. 1, oxide dispersion strengthened (ODS) alloys are candidates for this application.

Iron based ODS alloys have application in very high temperature nuclear reactors (VHTR) because they resist swelling in high neutron flux environments. Nickel and cobalt based ODS alloys have applications in Molten Salt Solar Power Tower power plants, because they have excellent high temperature corrosion resistance to molten salt. The high temperature properties of the materials used for piping and containment in next generation power plants are limiting factors to their operation. High temperature strength and creep rupture resistance are critical to ensure long life and safe operation. ODS alloys are produced by the solid state process of mechanical alloying and contain a fine dispersion of submicron yttrium oxide particles that provide the high temperature strength and creep rupture resistance necessary for these applications.

A major drawback to the use of ODS alloys in power plant applications is that they are difficult to join. Any joining technique in which the work pieces are melted, such as fusion welding, destroys the oxide dispersion responsible for the high temperature strength and creep rupture resistance. When ODS alloys are melted and resolidified, the oxides congregate at grain boundaries and the beneficial dispersion and resulting mechanical properties are lost.

Friction stir welding (FSW), on the other hand, does not disturb the dispersion because it is a solid state process whereby temperatures never exceed the melting point. As a result, the mechanical properties are not changed by the joining operation. In addition, FSW can join dissimilar metals. In next generation nuclear and solar energy production systems, this is an important consideration because ODS alloys are expensive. To minimize costs, their use should be restricted to only the high temperature portions of a power plant. When ODS alloys are joined by friction stir welding (FSW) the oxide dispersion microstructure and resulting high temperature strength and creep rupture resistance are retained.

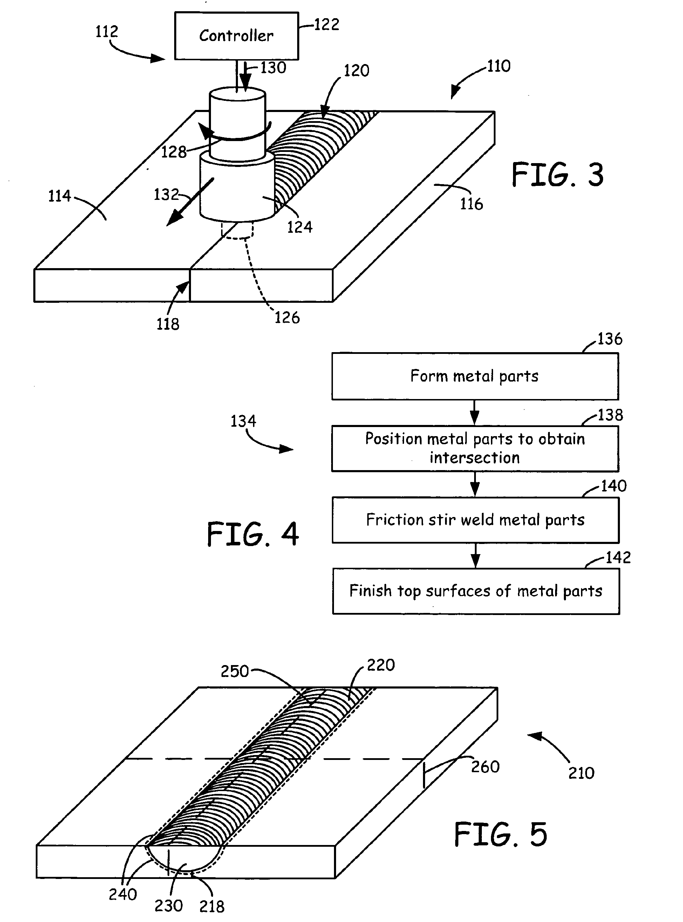

FIG. 3 is a perspective view of welded structure 110 being formed with friction stir welding (FSW) system 112. As shown, welded structure 110 includes metal parts 114 and 116, which abut each other at intersection 118. Metal parts 114 and 116 are subcomponents that are welded together to form welded structure 110, and may be a variety of different subcomponents (e.g., piping and container structures in nuclear and solar power plants). Metal parts 114 and 116 are each derived from ODS or other alloys which provide high strengths and ductilities for welded structure 110. One or both metal parts 114, 116 may be an ODS alloy comprising ABOUT 10.0-25.0 weight percent chromium, about 4.0-6.0 weight percent aluminum, about 0.25-1.5 weight percent titanium, about 0-2.0 weight percent molybdenum, about 0.25-1.5 weight percent yttrium oxide and a remainder substantially iron. One or both metal parts 114, 116 may be an ODS alloy comprising about 0-2.0 weight percent iron, about 10.0-30.0 weight percent chromium, about 0.25-10.0 weight percent aluminum, about 0.25-3.0 weight percent titanium, about 0-3.0 weight percent molybdenum, about 0-4.0 weight percent tungsten, about 0-1.0 weight percent zirconium, about 0-0.05 weight percent boron, about 0.5-1.5 weight percent yttrium oxide and a remainder substantially nickel. As discussed below, metal parts 114 and 116 are welded together at intersection 118 with FSW system 112 to form welded joint 120, where joint 120 substantially retains the pre-weld strengths of metal parts 114 and 116.

FSW system 112 includes controller 122, tool 124, and pin 126 (pin 126 shown with hidden lines). Pin 126 extends from the bottom surface of tool 124 and is pressed into metal parts 114 and 116 during a FSW operation. Controller 122 directs tool 124 and pin 126 to rotate in the direction of arrow 128 (or in an opposite rotational direction from arrow 128), and to press down into metal parts 114 and 116 in the direction of arrow 130. This causes pin 126 to dig into metal parts 114 and 116 at intersection 118 until tool 124 reaches metal parts 114 and 116. The depth of pin 126 determines the depth of the weld at intersection 118.

While tool 124 and pin 126 are rotating, controller 122 directs tool 124 and pin 126 to move along intersection 118 in the direction of arrow 132. As tool 124 and pin 126 move along intersection 118, the rotation of tool 124 and pin 126 frictionally heat the ODS and other alloys of metal parts 114 and 116 at intersection 118. The heated alloys enter a plastic-like state, and are stirred by the rotational motion of tool 124 and pin 126, thereby creating welded joint 120 at intersection 118. The FSW operation is a solid-state welding process, in which the heated alloys do not melt. As such, the refined microstructures of the ODS and other alloys are substantially retained while forming welded joint 120. This is in contrast to other welding techniques, such as fusion welding, in which the welded alloys are melted to form the welded joint. Melting ODS alloys destroys the refined microstructure of the alloys, thereby lowering the strength and creep rupture resistance of the resulting welded structure.

Pin 126, by necessity, needs to be of a material that withstands the extreme forces generated by the FSW process in high strength alloys; Cubic Boron Nitride (CBN) is preferred. Tungsten rhenium alloys and titanium carbide metal matrix composites are other candidates.

FIG. 4 is a flow diagram of method 134, which is a suitable method for forming welded structure 110 with FSW system 112. As shown, method 134 includes steps 136-142, and initially involves forming metal parts 114 and 116 (step 136). While discussed herein with respect to a pair of metal parts (i.e., metal parts 114 and 116), method 134 is also suitable for welding more than two metal parts to form a single welded structure.

After metal parts 114 and 116 are formed, metal parts 114 and 116 are then positioned adjacent each other to form intersection 118 at a desired welding location (step 138). Metal parts 114 and 116 are desirably braced together to prevent metal parts 114 and 116 from moving apart during the FS W operation. FS W system 112 is then used to weld metal parts 114 and 116 together at intersection 118 with an FSW operation (step 140). This forms welded joint 120 along intersection 118. If more than two metal parts are to be welded together, steps 138 and 140 are repeated for each intersection between the metal parts. When the FSW operation is completed, the top surfaces of metal parts 114 and 116 can be finished, if desired, (e.g., ground and polished) at welded joint 20 to provide a smooth aesthetic surface (step 142).

The operation parameters of FSW system 112 may vary depending on the geometries and materials of tool 124 and pin 126, and on the geometries of metal parts 114 and 116. Suitable rotational rates for tool 124 and pin 126 (in the direction of arrow 128) range from about 200 rotations-per-minute (rpm) to about 2,000 rpm, with particularly suitable rotational rates ranging from about 1,000 rpm to about 1,200 rpm. The pin 126 may have a diameter ranging from about 10mm (0.39 inch) to about 12mm (0.47 inch). Suitable vertical loads applied to tool 124 and pin 126 (in the direction of arrow 130) range from about 453 kilograms (i.e., about 1,000 pounds) to about 6795 kilograms (i.e., about 15,000 pounds). Suitable forward movement rates along intersection 118 (in the direction of arrow 132) range from about 2.5 centimeters/minute (i.e., about 1 inch/minute) to about 20 centimeters/minute (i.e., about 8 inches/minute). These operation parameters, when used with the above-discussed suitable dimensions for tool 124 and pin 126, provide high weld efficiencies and retained high temperature strength and creep resistance for welded joint 120.

Experiments were performed to characterize the effects of friction stir welding on the structure and properties of the welded zone in an iron-base ODS superalloy, PM2000. In these experiments, 3 mm (0.118 inch) sheets of PM2000 were joined by friction stir welding in a custom FSW machine. The rotational rate was 1,000 rpm. The traverse rate was 2.54 centimeters-per-minute (1.0 inches-per-minute) and the downward force was 1359 kilograms (3,000 pounds). The tool was cubic boron nitride. The welded sheets were then sectioned and polished to examine the integrity of the weld. Hardness readings were taken inside the weld in the heat affected zone and in the base metal. A perspective view of friction stir welded oxide dispersion strengthened structure 210 is shown in FIG. 5 to indicate where the sections were taken. FIG. 5 shows the completed weld after the tool has traversed the total length of intersection 218, and welded joint 220 covers the total length of welded structure 210 where the last two digits are identical to those in FIG. 3 and the alloy is PM2000. Welded joint 220 includes plasticized (welded) zone 230 surrounded by heat affected zone (HAZ) 240 indicated by dotted lines. Following welding, welded structure 210 was sectioned longitudinally along plane 250 and transversely along plane 260. The sections were then ground and polished for optical examination and hardness measurement.

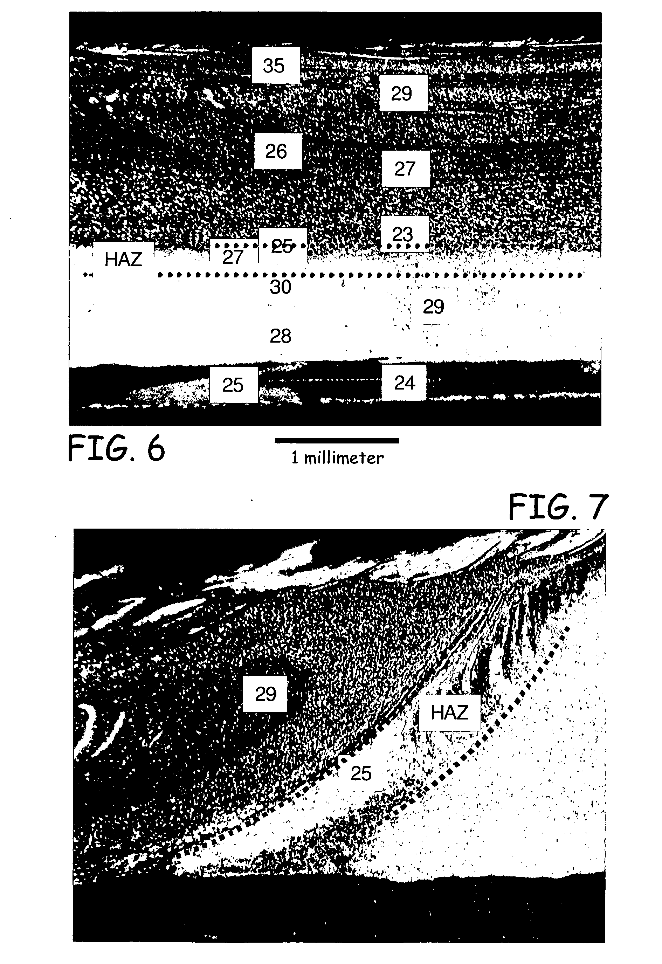

A photo of longitudinal section 250 is shown in FIG. 6. The darker region at the top of the figure is the welded or plasticized zone. The heat affected zone is indicated by the dotted lines. The unwelded metal is outside the HAZ. The numbers on the photo indicate Rockwell C microhardness values at those points. The hardness of the plasticized zone is at least equal to or greater than the base metal. A photo of the cross section 260 of the weld is shown in FIG. 7. The heat affected zone is indicated by dotted lines. The two hardness measurements taken on this sample indicate the welded zone to be harder than the base metal. Other workers attempting to join iron base ODS alloys by friction stir welding, report, in contrast to the results reported here, first, that the plasticized region was not continuous and secondly that the hardness of the plasticized zone was lower than that of the base metal because spacing between ODS particles is larger in the weld zone. Our process results in the spacing between ODS particles remaining submicron in the weld assuring that hardness, and therefore high strength, in the weld is at least equal to the base material.

Although the present invention has been described with reference to preferred embodiments, workers skilled in the art will recognize that changes may be made in form and detail without departing from the scope of the invention, which is defined by the claims and their equivalents.

## Claims

1. A welded structure comprising:
a first metal part formed of a first oxygen dispersion strengthened (ODS) alloy;
a second metal part formed of a second alloy;
a friction stir welded joint between the first metal part and second metal part, wherein the friction stir welded joint includes a plasticized zone, and a heat-affected zone.

2. The welded structure of claim 1, wherein the first ODS alloy comprises 10.0-25.0 weight percent chromium, 4.0-6.0 weight percent aluminum, 0.25-1.5 weight percent titanium, 0-2.0 weight percent molybdenum, 0.25-1.5 weight percent yttrium oxide and a remainder substantially iron.

3. The welded structure of claim 1, wherein the first ODS alloy comprises 0-2.0 weight percent iron, 10.0-30.0 weight percent chromium, 0.25-10.0 weight percent aluminum, 0.25-3.0 weight percent titanium, 0-3.0 weight percent molybdenum, 0-4.0 weight percent tungsten, 0-1.0 weight percent zirconium, 0-0.05 weight percent boron, 0.5-1.5 weight percent yttrium oxide and a remainder substantially nickel.

4. The welded structure of any of claims 1, 2 or 3 wherein the second alloy comprises an ODS alloy.

5. The welded structure of claim 4, wherein the second alloy comprises an ODS alloy substantially identical to the first ODS alloy.

6. The welded structure of claim 5, wherein hardness of the plasticized zone is equal to or greater than hardness of the first ODS alloy.

7. A method of forming a welded structure, the method comprising friction stir welding an intersection between a first metal part and a second metal part wherein the first metal part is derived from an oxygen dispersion strengthened (ODS) alloy.

8. The method of claim 7, wherein the first ODS alloy comprises 10.0-25.0 weight percent chromium, 4.0-6.0 weight percent aluminum, 0.25-1.5 weight percent titanium, 0-2.0 weight percent molybdenum, 0.25-1.5 weight percent yttrium oxide and a remainder substantially iron.

9. The method of claim 7, wherein the first ODS alloy comprises 0-2.0 weight percent iron, 10.0-30.0 weight percent chromium, 0.25-10.0 weight percent aluminum, 0.25-3.0 weight percent titanium, 0-3.0 weight percent molybdenum, 0-4.0 weight percent tungsten, 0-1.0 weight percent zirconium, 0-0.05 weight percent boron, 0.5-1.5 weight percent yttrium oxide and a remainder substantially nickel.

10. The method of any of claims 7, 8 or 9 wherein the second metal part is derived from an ODS alloy, and wherein the ODS alloy of the second metal part is substantially identical to the ODS alloy of the first metal part.

11. The method of claim 10, wherein friction stir welded joint includes a plasticized zone and a heat affected zone and wherein hardness of plasticized zone is equal to or greater than hardness of the ODS alloy.

12. The method of any of claims 7 to 11, wherein the friction stir welding comprises rotating a tool of a friction stir welding system at a rotational rate ranging from 200 rotations per minute to 2000 rotations per minute, wherein the tool has a diameter ranging from 10mm (0.39 inch) to 12mm (0.47 inch).

13. The method of any of claims 7 to 12, wherein the rotational rate of the friction stir welding tool ranges from 1000 rotations per minute to 1200 rotations per minute.

14. The method of any of claims 7 to 13, wherein the tool is cubic boron nitride (CBN) or a tungsten rhenium alloy or a titanium carbide metal matrix composite.

15. The method of any of claims 7 to 14, further comprising:
forming the first metal part from a first ODS alloy;
forming the second metal part from a second alloy; and
positioning the first metal part adjacent to the second metal part to form the intersection between the first metal part and the second metal part.
